Europäisches Patentamt

European Patent Office

Office européen des brevets

(19)

(11) EP 0 901 257 B1

(12) EUROPEAN PATENT SPECIFICATION

(45) Date of publication and mention
of the grant of the patent:
**01.12.2004 Bulletin 2004/49**

(51) Int Cl.$^7$: **H04L 27/00**, H04L 25/03,
H04L 27/20, H04L 5/12,
H04L 5/22

(21) Application number: **98402023.0**

(22) Date of filing: **10.08.1998**

(54) **Method for generating a multimodulation frame and modulator for carrying out said method**

Verfahren zur Erzeugung eines Multimodulationsrahmens und zugehöriger Modulator

Procédé pour la génération d'une trame à modulations multiples et modulateur pour réaliser ce procédé

(84) Designated Contracting States:
**DE ES FI FR GB IT SE**

(30) Priority: **02.09.1997 ES 9701873**

(43) Date of publication of application:
**10.03.1999 Bulletin 1999/10**

(73) Proprietor: **ALCATEL**
**75008 Paris (FR)**

(72) Inventors:
• **Nunez Leon de Santos, Gregorio**
**45002 Toledo (ES)**
• **Fernandez Duran, Alfonso**
**28229 Villanueva del Pardillo, Madrid (ES)**
• **Casajus Quiros, Francisco Javier**
**28033 Madrid (ES)**
• **Paez Borrallo, José Manuel**
**28033 Las Rozas, Madrid (ES)**

(74) Representative: **Lamoureux, Bernard et al**
**Compagnie Financière Alcatel**
**Département de Propriété Industrielle,**
**5, rue Noel Pons**
**92734 Nanterre Cedex (FR)**

(56) References cited:
**WO-A-96/35274**

• **POKLEMBA J J: "Digital tracking loops for a programmable digital modem" , MILITARY COMMUNICATIONS CONFERENCE, 1992. MILCOM '92, CONFERENCE RECORD. COMMUNICATIONS - FUSING COMMAND, CONTROL AND INTELLIGENCE., IEEE SAN DIEGO, CA, USA 11-14 OCT. 1992, NEW YORK, NY, USA,IEEE, US, PAGE(S) 644-650 XP010060940 ISBN: 0-7803-0585-X * abstract * Section Pre-Averager Receive Data Filter * figure 1 ***
• **MORINAGA N ET AL: "INTELLIGENT RADIO COMMUNICATION TECHNIQUES FOR ADVANCED WIRELESS COMMUNICATIONS SYSTEMS" , IEICE TRANSACTIONS ON COMMUNICATIONS, INSTITUTE OF ELECTRONICS INFORMATION AND COMM. ENG. TOKYO, JP, VOL. E79-B, NR. 3, PAGE(S) 214-221 XP000588442 ISSN: 0916-8516 * abstract * Section 1 Section 2**
• **SAMPEI S ET AL: "ADAPTIVE MODULATION/TDMA SCHEME FOR PERSONAL MULTI-MEDIA COMMUNICATION SYSTEMS" , PROCEEDINGS OF THE GLOBAL TELECOMMUNICATIONS CONFERENCE (GLOBECOM). SAN FRANCISCO, NOV. 28 - DEC. 2, 1994, NEW YORK, IEEE, US, VOL. VOL. 2, PAGE(S) 989-993 XP000488685 ISBN: 0-7803-1821-8 * the whole document ***

EP 0 901 257 B1

**Description**

## OBJECT OF THE INVENTION

The present invention refers to a method for generating a multi-modulation frame, as well as to a modulator and a demodulator to implement the method. The modulator and demodulator according to the invention can, for example, be implemented in a unit of a mobile radiocommunications system as set forth in the appended claims.

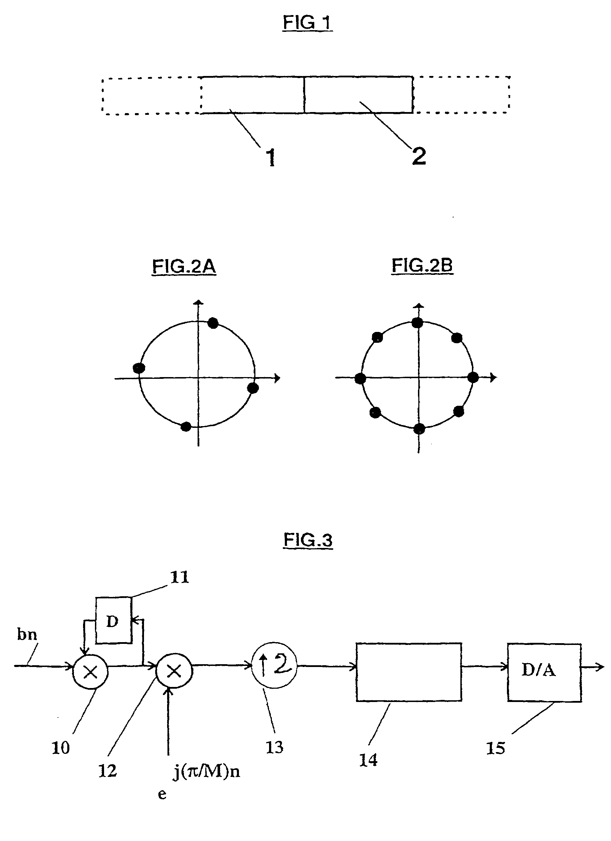

A frame is defined as a signal which includes successive time intervals. With reference to figure 1, a multi-modulation frame is characterised in that it includes at least two time intervals 1 and 2, each being defined by their respective modulations which are different one from the other.

## STATE OF THE ART

A frame of the type defined above can be employed for example in the DECT (Digital Enhanced Cordless Telecommunications) standard issued by the ETSI (European Telecommunications Standards Institute) with the objective of increasing the traffic capacity in at least one channel, or time interval, without changing the modulation defined for other channels and maintaining compatibility with other units of the same system which do not have the modulation changing facility.

For example, with reference to figures 1, 2A and 28, a first time interval 1 is defined by a GFSK (Gaussian Frequency Shift Keying) modulation already used in the DECT standard and a second time interval 2 is defined by a modulation $\pi/4$DQPSK ($\pi/4$-Differential Quadrature Phase Shift Keying). The two modulations define respective constellations which are shown in figures 2A and 2B with respect to predefined reference axes.

In the DECT standard, the modulated signal is delimited by a spectral mask, the modulated signal having to be contained within this mask.

When use is made of two modulations in the same frame, for example the two modulations that appear in figures 2A and 2B, respectively, with no control over the change from one modulation to the other, the resulting signal can, on one hand, produce a spectrum which does not lie within the delimited spectral mask and, on the other one, include intersymbol interferences which provoke the loss of symbols which coincide in time with the modulation change.

A modulator is disclosed in POKLEMBA J J: "Digital tracking loops for a programmable digital modem", MILITARY COMMUNICATIONS CONFERENCE, 1992. MILCOM '92, CONFERENCE RECORD. COMMUNICATIONS - FUSING COMMAND, CONTROL AND INTELLIGENCE, IEEE SAN DIEGO, CA, USA 11-14 OCT. 1992, NEW YORK, NY, USA, PAGE(S) 644-650 I, that can be programmed for operating with several modulation schemes and includes three tracking loops such that a frame modulated according to different modulations is demodulated. However, frame does not correspond to a DECT frame, as a result, the frame is not modulated according to GFSK and $\pi/4$DQPSK techniques.

An adaptive modulation technique is known from MORINAGA N ET AL: "INTELLIGENT RADIO COMMUNICATION TECHNIQUES FOR ADVANCED WIRELESS COMMUNICATIONS SYSTEMS". IEICE TRANSACTIONS ON COMMUNICATIONS, INSTITUTE OF ELECTRONICS INFORMATION AND COMM. ENG. TOKYO, JP, VOL.E79-B, NR. 3, PAGE(S) 214-221, accoding to which the modulation scheme is selected from several different modulations based on the traffic and the received signal level, i.e. C/Ic (power ratio of the desired signal to the co-channel interference). However, this document is silent about providing change in the modulation.

## CHARACTERISATION OF THE INVENTION

A first objective of the present invention is to provide a method for generating a multi-modulation frame which defines a spectrum that is contained within an amplitude-delimited spectral mask and suppresses intersymbol interferences.

A second objective of the invention is to define a modulator to implement the method defined by this invention.

Consequently, a method for generating a multi-modulation frame which includes at least a first time interval and a second time interval, said first and second time intervals being defined by first and second modulations, respectively, is characterised in that said method comprises a step-by-step interchange stage, with at least two steps, for changing the coefficients of a modulation filter from a first set of coefficients associated with the first modulation to a second set of coefficients associated with the second modulation.

Typically the step-by-step coefficient interchange stage is realized by means of successive partial changes in the coefficients, changing in each step a few coefficients in the first set of coefficients associated with the first modulation for coefficients of the second set associated with the second modulation.

For example, the first modulation is a GFSK modulation and the second modulation is a $\pi/4$DQPSK modulation.

A modulator to implement the method according to the invention comprises modulation filter means and means to effect, step by step, the change-over of the coefficients of said modulation filter means from the first set of filter coefficients associated with the first modulation to the second set of filter coefficients associated with the second modulation.

## BRIEF DESCRIPTION OF THE FIGURES

A fuller explanation of the present invention, as well as of other features and advantages, is to be found in the following description based on the figures attached, in which:

- figure 1 shows a format of a multi-modulation frame;
- figures 2A and 2B show two constellations relative to GFSK and $\pi$/4DQPSK modulations, respectively;
- figure 3 shows a block diagram of a modulator according to the invention;
- figure 4 shows a block diagram of a demodulator according to the invention, and
- figure 5 shows, in detail, and in the form of a block diagram, a filter incorporated in the modulator of figure 3.

## DESCRIPTION OF THE INVENTION

The method according to the invention avoids the transient effects produced by the change in modulation like intersymbol interferences or phase discontinuities, which appear in each of the successive frames when the change in modulation is applied without any adjustment mechanism at the instant which, with reference to figure 1, separates the two time intervals **1** and **2**.

With reference to figure 3, a modulator according to a first implementation of the invention, comprises a first multiplier **10,** a delay line **11**, a second multiplier **12**, an oversampler **13**, a configurable filter **14** and a digital-to-analogue converter **15**. The binary signal **bn** is applied to a first input of the multiplier **10** the output of which is applied, on one hand, to a second input of the multiplier **10** through the delay line **11** and, on the other hand, to an input of the multiplier **12**. This multiplier **12** receives, through a second input, the signal $e^{j(\pi/M)n}$, where n is a bit rank. The output of the multiplier **12** is connected to an input of the configurable filter **14** through the oversampler **13**. The output of the configurable filter **14** is connected to an input of the digital-to-analogue converter **15**.

This modulator, as is shown in figure 3, is suitable for performing both GMSK modulation and $\pi$/4DQPSK modulation, the GMSK modulation being equivalent to a GFSK modulation when the following conditions are satisfied:

$$B \times T = 0.5;$$

and

$$0.35 < h < 0.70,$$

where B is the signal bandwidth, T is the duration of a symbol, and h is the value of the modulation index.

The modulator of figure 3 is also suitable for performing both GMSK modulation and $\pi$/4DQPSK modulation under the following conditions:

- for GMSK modulation:

    *bn $\in$ {1,-1}; M = 2 and the configurable filter **14** is a Guassian filter; and

- for $\pi$/4DQPSK modulation:

    *bn $\in$ {1, j, -j, -1}; M = 4 and the configurable filter **14** is a root raised cosine filter.

The Gaussian filter employed for the GMSK modulation intentionally introduces intersymbol interferences between the transient symbols.

There would be no particularly unknown problem resulting from this occurrence in processing the signal with GMSK modulation if this GMSK modulation with its associated Gaussian filter did not coexist in the same frame with a $\pi$/4DQPSK (or any other) modulation and its associated root raised cosine filter (or the shaping filter corresponding to the modulation in question). In the case of a multi-modulation frame, the final symbols with GMSK modulation in field **1** (figure 1) produce "tails" which extend through the leading symbols of field **2** with π/4DQPSK modulation. This effect produces distortions which result in systematic loss of the symbols located around the instant of transition between the two modulations, GMSK and π/4DQPSK. To overcome this problem, according to the invention, a method to generate a multi-modulation frame which includes at least a first time interval **1** defined by a first modulation and a second time interval **2** defined by a second modulation, comprises a step-by-step interchange stage, with at least two steps, for changing the coefficients of the configurable modulation filter **14** from a first set of coefficients associated with the GMSK modulation to a second set of coefficients associated with the π/4DQPSK modulation.

The table on the following page shows more precisely an example of a step-by-step interchange stage for changing the coefficients of the configurable modulation filter **14.**

Gaussian and root raised cosine filters employed for GMSK and π/4DQPSK modulations, respectively, use the same number of coefficients, for example twelve (12) in the implementation described. This number of coefficients corresponds to the greatest number required by each of the filter types, Guassian and root raised cosine. As is shown in this table:

- when the symbol with rank (N-2) of the GMSK modulation arrives, all the coefficients of the configurable filter are coefficients of the Gaussian filter,
- when the symbol with rank (N-1) of the GMSK modulation arrives, all the coefficients of the configurable filter are coefficients of the Gaussian filter

## Table

| f(0) | f(1) | f(2) | f(3) | f(4) | f(5) | f(6) | f(7) | f(8) | f(9) | f(10) | f(11) |
|---|---|---|---|---|---|---|---|---|---|---|---|
| N-2 | 0 | N-3 | 0 | N-4 | 0 | N-5 | 0 | N-6 | 0 | N-7 | 0 |

| h(0) | h(1) | f(2) | f(3) | f(4) | f(5) | f(6) | f(7) | f(8) | f(9) | f(10) | f(11) |
|---|---|---|---|---|---|---|---|---|---|---|---|
| N-1 | 0 | N-2 | 0 | N-3 | 0 | N-4 | 0 | N-5 | 0 | N-6 | 0 |

| h(0) | h(1) | h(2) | h(3) | f(4) | f(5) | f(6) | f(7) | f(8) | f(9) | f(10) | f(11) |
|---|---|---|---|---|---|---|---|---|---|---|---|
| N | 0 | N-1 | 0 | N-2 | 0 | N-3 | 0 | N-4 | 0 | N-5 | 0 |

| h(0) | h(1) | h(2) | h(3) | h(4) | h(5) | f(6) | f(7) | f(8) | f(9) | f(10) | f(11) |
|---|---|---|---|---|---|---|---|---|---|---|---|
| N+1 | 0 | N | 0 | N-1 | 0 | N-2 | 0 | N-3 | 0 | N-4 | 0 |

| h(0) | h(1) | h(2) | h(3) | h(4) | h(5) | h(6) | h(7) | f(8) | f(9) | f(10) | f(11) |
|---|---|---|---|---|---|---|---|---|---|---|---|
| N+2 | 0 | N+1 | 0 | N | 0 | N-1 | 0 | N-2 | 0 | N-3 | 0 |

| h(0) | h(1) | h(2) | h(3) | h(4) | h(5) | h(6) | h(7) | h(8) | h(9) | f(10) | f(11) |
|---|---|---|---|---|---|---|---|---|---|---|---|
| N+3 | 0 | N+2 | 0 | N+1 | 0 | N | 0 | N-1 | 0 | N-2 | 0 |

| h(0) | h(1) | h(2) | h(3) | h(4) | h(5) | h(6) | h(7) | h(8) | h(9) | h(10) | h(11) |
|---|---|---|---|---|---|---|---|---|---|---|---|
| N+4 | 0 | N+3 | 0 | N+2 | 0 | N+1 | 0 | N | 0 | N-1 | 0 |

## Table legend

Coefficients of the Gaussian filter (GMSK modulation).

Coefficients of the root raised cosine filter ($\pi$/4DQPSK modulation).

Rank of aligned bits with corresponding coefficients.

N designates the rank of the last symbol with GMSK modulation.

except for the first two coefficients h(0) and h(1), which are coefficients of the $\pi$/4DQPSK filter (root raised cosine),
- when the last symbol of the GMSK modulation with rank (N) arrives, all the coefficients of the configurable filter are coefficients of the Gaussian filter except for the first four coefficients h(0), h(1), h(2) and h(3), which are coefficients of the π/4DQPSK filter,

- when the first symbol of the π/4DQPSK modulation with rank (N+1) arrives, the last six coefficients of the configurable filter are coefficients of the Gaussian filter and the first six are coefficients of the π/4DQPSK filter,

- and so on.

Thus, the step-by-step coefficient change is realized by means of successive partial changes in the coefficients, changing in each step a few coefficients of the first set of coefficients associated with the first modulation for coefficients of the second set of coefficients associated with the second modulation.

In a similar fashion, a step-by-step interchange stage can be designed for the coefficients of the configurable modulation filter **14** from coefficients associated with π/4DQPSK modulation to coefficients associated with GMSK modulation, when the transition takes place from π/4DQPSK to GMSK modulation. However, this stage does not seem to have the same importance because the problem arises from the use of the Gaussian filter employed for GMSK modulation which introduces "tails" that interfere with the π/4DQPSK modulation symbols.

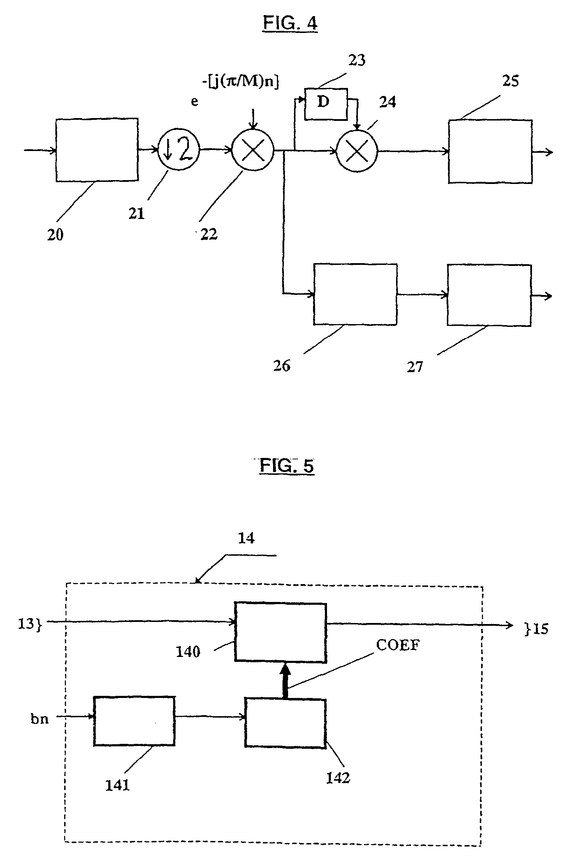

With reference to figure 5, the configurable filter **14** comprises a modulation filter **140**, a synchronisation circuit **141** and a programming circuit **142.** The synchronisation circuit **141** receives the bit stream **bn** and, depending on predefined bits, for example synchronisation bits in the received frame, defines the frame synchronisation and, consequently, the modulation change-over time can be known. When the bit of rank (N-2) of the frame is expected to arrive (see table defined above), the synchronisation circuit **141** actuates the programming circuit **142**, which, step-by-step, loads the coefficients COEF of the modulation filter **140** as is shown in the table above.

A demodulator to demodulate a multi-modulation frame produced by a modulator as the described with reference to figure 3 is shown in figure 4.

The demodulator comprises a root raised cosine filter **20**, a subsampler **21** and a first multiplier **22** connected in cascade. The first multiplier **22** receives the signal $e^{-j(\pi/M)n}$ through another input. The output from the first multiplier **22** can be connected to two branches shown in parallel. A first branch, used to generate a differential output, comprises a second multiplier **24,** a delay line **23** and a threshold detector **25**. The second multiplier **24** receives at a first input the output signal from the first multiplier **22** and at a second input this same output signal from the first multiplier **22** delayed through the delay line **23**. The output of the second multiplier **24** is applied to an input of a threshold detector **25**.

A second branch, used to generate a coherent output, comprises a threshold detector **26** and a decoder **27** connected in cascade.

Although in this description of the demodulator use is made of a same fixed predefined demodulation filter (root raised cosine filter **20**), a skilled man can employ two filters adapted to the forms of the received signal with GMSK and π/4DQPSK modulation, respectively. In this case, the demodulator can include a step-by-step interchange stage for the coefficients of the demodulation filter from a first set of coefficients associated with the GMSK modulation to a second set of coefficients associated with the π/4DQPSK modulation, this being done in correspondence with the change in coefficients in the modulator as was described above. The demodulator comprises a configurable demodulation filter and a circuit for changing, step-by-step, the coefficients of this demodulation filter from a first set of coefficients adapted to the waveform of the first modulation to a second set of coefficients adapted to the waveform of the second modulation, and this being done in correspondence with the change of coefficients in the modulator. This modulator must also include a frame synchronisation circuit to detect the modulation change time and, in consequence, activate the coefficient interchange circuit.


**Claims**

1. Method for generating a multi-modulation frame which includes at least a first time interval (1) and a second time interval (2), said first and second time intervals (1, 2) being defined by first and second modulations, respectively, **characterised in that** the method comprises a step-by-step interchange stage, with at least two steps, for changing the coefficients of a modulation filter (140) from a first set of coefficients associated with the first modulation to a second set of coefficients associated with the second modulation.

2. Method according to claim 1, **characterised in that** said step-by-step coefficient interchange stage is realized by means of successive partial changes in the coefficients, changing in each step a few coefficients of said first set of coefficients associated with said first modulation for coefficients of said second set of coefficients associated with said second modulation.

3. Method according to claim 1, **characterised in that** said first modulation is a GFSK modulation and the second modulation is a π/4DQPSK modulation.

4. Modulator including means adapted to implement the method according to claim 1, **characterised in that** it comprises modulation filter means (140) and means (141, 142) to change step-by-step the coefficients of said modulation filter means (140) from a first set of filter coefficients associated with the first modulation to a second set of filter coefficients associated with the second modulation.

5. Demodulator including means adapted to demodulate a frame received from a modulator according to claim **4, characterised in that** it comprises a configurable demodulation filter and means to change step-by-step the coefficients of the demodulation filter from a first set of coefficients adapted to the waveform of the first modulation to a second set of coefficients adapted to the waveform of the second modulation, and this being done in correspondence with the change of coefficients in said modulator.

6. Radiocommunications system including mobile terminals comprising a modulator according to claim 4.

7. Radiocommunications system including mobile terminals comprising a demodulator according to claim 5.

**Patentansprüche**

1. Verfahren zur Erzeugung eines Multimodulationsrahmens, der mindestens ein erstes Zeitintervall (1) und ein zweites Zeitintervall (2) enthält, wobei das erste und das zweite Zeitintervall (1, 2) durch erste, bzw. zweite Modulationen definiert sind, **dadurch gekennzeichnet, dass** das Verfahren eine Stufe zum schrittweisen Wechsel mit mindestens zwei Schritten enthält, um die Koeffizienten eines Modulationsfilters (140) von einem ersten Satz von Koeffizienten, welcher der ersten Modulation zugeordnet ist, zu einem zweiten Satz von Koeffizienten zu wechseln, welcher der zweiten Modulation zugeordnet ist.

2. Verfahren gemäß Anspruch 1, **dadurch gekennzeichnet, dass** die Stufe zum schrittweisen Wechsel von Koeffizienten mittels aufeinander folgender teilweiser Änderungen der Koeffizienten realisiert wird, wobei in jedem Schritt einige Koeffizienten des ersten Satzes von Koeffizienten, die der ersten Modulation zugeordnet sind, in Koeffizienten des zweiten Satzes gewechselt werden, die der zweiten Modulation zugeordnet sind.

3. Verfahren gemäß Anspruch 1, **dadurch gekennzeichnet, dass** die erste Modulation eine GFSK-Modulation und die zweite Modulation eine π/4DQPSK-Modulation ist.

4. Modulator, der Mittel enthält, die so angepasst sind, dass sie das Verfahren gemäß Anspruch 1 implementieren, **dadurch gekennzeichnet, dass** er Modulations-Filter-Mittel (140) und Mittel (141, 142) zur schrittweisen Änderung der Koeffizienten der Modulationsfilter-Mittel (140) von einem ersten Satz von Filterkoeffizienten, welcher der ersten Modulation zugeordnet ist, zu einem zweiten Satz von Filterkoeffizienten, welcher der zweiten Modulation zugeordnet ist, enthält.

5. Demodulator, der Mittel enthält, die so angepasst sind, dass sie einen von einem Modulator gemäß Anspruch 4 empfangenen Rahmen demodulieren, **dadurch gekennzeichnet, dass** er ein konfigurierbares Demodulations-Filter und Mittel zur schrittweisen Änderung der Koeffizienten des Demodulationsfilters von einem ersten Satz von Koeffizienten, welcher der Signalform der ersten Modulation angepasst ist, zu einem zweiten Satz von Koeffizienten, welcher der Signalform der zweiten Modulation angepasst ist, enthält, und dies entsprechend der Änderung der Koeffizienten in dem Modulator durchgeführt wird.

6. Funkkommunikationssystem, das mobile Endgeräte enthält, die einen Modulator gemäß Anspruch 4 enthalten.

7. Funkkommunikationssystem, das mobile Endgeräte enthält, die einen Demodulator gemäß Anspruch 5 enthalten.

**Revendications**

1. Procédé pour la génération d'une trame à modulations multiples, comportant au moins un premier intervalle de temps (1) et un deuxième intervalle de temps (2), lesdits premier et deuxième intervalles de temps (1, 2) étant définis par des première et deuxième modulations, respectivement, **caractérisé en ce que** ledit procédé comprend une phase d'échange par étapes, comportant au moins deux étapes, pour changer les coefficients d'un filtre de modulation (140) d'un premier groupe de coefficients associés à la première modulation à un deuxième groupe de coefficients associés à la deuxième modulation.

2. Procédé selon la revendication 1, **caractérisé en ce que** ladite phase d'échange des coefficients par étapes est réalisée au moyen de changements partiels successifs des coefficients, en remplaçant à chaque étape quelques coefficients dudit premier groupe de coefficients associés à ladite première modulation par des coefficients dudit deuxième groupe de coefficients associés à ladite deuxième modulation.

3. Procédé selon la revendication **1, caractérisé en ce que** ladite première modulation est une modulation GFSK et la deuxième modulation est une modulation $\pi$/4DQPSK.

4. Modulateur comportant un moyen adapté pour mettre en oeuvre le procédé selon la revendication **1, caractérisé en ce qu'**il comprend un moyen formant filtre de modulation (140) et un moyen (141, 142) pour changer par étapes les coefficients dudit moyen formant filtre de modulation (140) d'un premier, groupe de coefficients de filtre associés à la première modulation à un deuxième groupe de coefficients de filtre associés à la deuxième modulation.

5. Démodulateur comportant un moyen adapté pour démoduler une trame reçue d'un modulateur selon la revendication 4, **caractérisé en ce qu'**il comprend un filtre de démodulation configurable et un moyen pour changer par étapes les coefficients du filtre de démodulation d'un premier groupe de coefficients adaptés à la forme d'onde de la première modulation à un deuxième groupe de coefficients adaptés à la forme d'onde de la deuxième modulation, ceci se faisant en correspondance avec le changement de coefficients dans ledit modulateur.

6. Système de radiocommunications comportant des terminaux mobiles comprenant un modulateur selon la revendication 4.

7. Système de radiocommunications comportant des terminaux mobiles comprenant un démodulateur selon la revendication 5.

## FIG 1

## FIG.2A

## FIG.2B

## FIG.3

$e$

$j(\pi/M)n$

EP 0 901 257 B1

FIG. 4

$-[j(\pi/M)n]$
e

23

D

24

25

20  21  22

26  27

FIG. 5

14

13}

140

COEF

}15

bn

141  142

10